# FASCICULE DE BREVET EUROPEEN

(11) **EP 4 007 290 B1**
(45) Date de publication et mention de la délivrance du brevet: **04.10.2023**
(21) Numéro de dépôt: 20210357.8
(22) Date de dépôt: 27.11.2020
(51) Int. Cl.: H04Q 9/00, G01D 4/00

(54) **PROCÉDÉ ET DISPOSITIF ÉLECTRONIQUE DE PILOTAGE D'UN SYSTÈME DE COMMUNICATION POUR COMPTEUR ÉLECTRIQUE, PROGRAMME D'ORDINATEUR ET INSTALLATION ÉLECTRONIQUE DE TRANSMISSION ASSOCIÉS**
VERFAHREN UND ELEKTRONISCHES GERÄT ZUR STEUERUNG EINES KOMMUNIKATIONSSYSTEMS FÜR EINEN STROMZÄHLER, ENTSPRECHENDES COMPUTERPROGRAMM UND ENTSPRECHENDE ELEKTRONISCHE DATENÜBERTRAGUNGSANLAGE
METHOD AND ELECTRONIC DEVICE FOR CONTROLLING A COMMUNICATION SYSTEM FOR AN ELECTRIC METER, RELATED COMPUTER PROGRAM AND ELECTRONIC TRANSMISSION INSTALLATION

(43) Date de publication de la demande: 01.06.2022
(73) Titulaire: TOTAL DIRECT ENERGIE, 75015 Paris (FR)
(72) Inventeur: GREGOIRE, Tony Marcel Jean, 75013 PARIS (FR); DUPERRY, Louis, 75017 PARIS (FR); JAMIN, Caroline Reine, 75006 PARIS (FR); JEANNEY, Remi Sylvain Dominique, 92130 ISSY LES MOULINEAUX (FR)
(74) Mandataire: Lavoix

(56) Documents cités:
- EP-A2- 2 426 947
- WO-A1-2012/084524

## Description

La présente invention concerne un procédé de pilotage d'un système de communication pour un compteur électrique, le système de communication étant adapté pour être connecté au compteur électrique et pour transmettre à un utilisateur des données issues du compteur électrique, le procédé étant mis en oeuvre par un dispositif électronique de pilotage.

L'invention concerne également un programme d'ordinateur comportant des instructions logicielles qui, lorsqu'elles sont exécutées par un ordinateur, mettent en oeuvre un tel procédé de pilotage.

L'invention concerne aussi un tel dispositif électronique de pilotage et une installation électronique de transmission de données issues du compteur électrique, comprenant de tels système de communication et dispositif de pilotage.

L'invention concerne le domaine de la transmission de données, telles que des données de consommation électrique, issues d'un compteur électrique. Cette transmission de données est effectuée par l'intermédiaire d'un système de communication adapté pour être connecté au compteur électrique via une interface de communication et pour transmettre à un utilisateur des données issues du compteur électrique.

Le système de communication est typiquement un système de communication ERL (pour Emetteur Radio Linky), le compteur électrique étant un compteur électrique Linky^{™} de la société ENEDIS équipé d'une interface TIC (pour Télé-Information Client) via laquelle sont issues les données aptes à être transmises par le système de communication.

On connaît du document FR 3 058 006 B1 un système de communication du type précité. Le système de communication est un système de communication ERL couplé à un compteur électrique Linky^{™} via une interface TIC. Le système de communication comprend un dispositif d'alimentation électrique pour alimenter un dispositif de communication apte à émettre des données, telles que des données de consommation électrique, issues du compteur électrique. Le dispositif d'alimentation électrique comprend une source de tension qui est régulable en tension via un signal de régulation, et un dispositif de rétroaction délivrant ledit signal de régulation de manière à maintenir une puissance source délivrée par la source de tension autour d'une puissance source de référence. Le dispositif d'alimentation électrique comprend également une alimentation tampon alimentée par la source de tension et délivrant une puissance tampon contribuant à la puissance de sortie fournie par le dispositif d'alimentation électrique, au moins quand ladite puissance de sortie est supérieure à la puissance source de référence.

Le dispositif d'alimentation permet alors au système de communication de fonctionner même si le dispositif de communication consomme, pendant au moins certaines phases de son fonctionnement, une puissance électrique supérieure à celle apte à être délivrée par l'interface TIC.

Toutefois, un tel système de communication est susceptible d'être connecté successivement à plusieurs compteurs électriques, et de transmettre les données issues de ces compteurs électriques à un même utilisateur, ce qui engendre des problèmes de confidentialité et de protection des données.

Le document EP 2 426 947 A2 divulgue un procédé pour fournir sélectivement des données de consommation à un utilisateur. Les données sont transmises de l'unité de collecte à une unité d'affichage mobile affectée à l'utilisateur. Le processus d'identification est effectué par l'unité de collecte, lors de l'établissement d'une connexion avec l'unité d'affichage.

Le but de l'invention est donc de proposer un procédé et un dispositif électronique de pilotage d'un système de communication pour compteur électrique permettant d'améliorer la confidentialité et la protection des données, telles que des données de consommation électrique, issues du compteur électrique.

A cet effet, l'invention a pour objet un procédé de pilotage d'un système de communication pour un compteur électrique, le système de communication étant adapté pour être connecté au compteur électrique et pour transmettre à un utilisateur des données issues du compteur électrique, le procédé étant mis en oeuvre par un dispositif électronique de pilotage et comprenant les étapes suivantes :
- acquisition d'un premier identifiant, le premier identifiant étant apte à identifier de manière unique l'utilisateur,
- réception de deuxième et troisième identifiants de la part du système de communication, le deuxième identifiant étant apte à identifier de manière unique le système de communication et le troisième identifiant étant apte à identifier de manière unique le compteur électrique, et
- test de validité d'un appairage du système de communication avec le compteur électrique, en fonction des premier, deuxième et troisième identifiants ; l'appairage étant autorisé en cas de test positif et inhibé sinon.

Avec le procédé de pilotage selon l'invention, l'acquisition d'un premier identifiant relatif à l'utilisateur et la réception de deuxième et troisième identifiants respectivement relatifs au système de communication et au compteur électrique, puis le test de la validité de l'appairage du système de communication avec le compteur électrique en fonction de ces premier, deuxième et troisième identifiants permet de s'assurer que le système de communication va bien être appairé avec le compteur électrique pour lequel il est destiné, et d'inhiber l'appairage sinon, c'est-à-dire de l'interdire.

L'unicité du couple formé des deuxième et troisième identifiants permet en outre de garantir que le système de communication pourra être couplé à un unique compteur électrique, et l'utilisateur associé à cet unique couple est en outre pris en compte via le premier identifiant qui forme, avec le couple des deuxième et troisième identifiants, un triplet unique.

En cas d'appairage autorisé à l'issue de ce test de validité, le système de communication envoie régulièrement à un équipement de supervision des trames de données de consommation, ainsi que les deuxième et troisième identifiants, ce qui permet de vérifier que le couple système de communication-compteur électrique reste autorisé pour les transmissions ultérieures de données issues du compteur électrique.

Suivant d'autres aspects avantageux de l'invention, le procédé de pilotage comprend une ou plusieurs des caractéristiques suivantes, prises isolément ou suivant toutes les combinaisons techniquement possibles :
- le procédé comprend en outre, préalablement à l'étape de réception, une étape d'envoi au système de communication d'une requête d'obtention des deuxième et troisième identifiants,

les deuxième et troisième identifiants étant ensuite reçus lors de l'étape de réception, en réponse à la requête d'obtention ;
   - si l'appairage du système de communication avec le compteur électrique est autorisé à l'issue de l'étape de test, le procédé comprend en outre une étape d'obtention, via le système de communication, de données issues du compteur électrique, telles que des données de consommation électrique ;
   - l'étape de test comporte l'émission, à un équipement électronique de supervision, d'une requête de validation d'un triplet formé des premier, deuxième et troisième identifiants,
le test de validité de l'appairage étant ensuite positif en cas de réception d'une validation du triplet, de la part de l'équipement de supervision et en réponse à la requête de validation ; et
   - lors de l'étape de test, la requête de validation est émise sous forme d'au moins un message chiffré.

L'invention a également pour objet un programme d'ordinateur comportant des instructions logicielles qui, lorsqu'elles sont exécutées par un ordinateur, mettent en oeuvre un procédé de pilotage, tel que défini ci-dessus.

L'invention a également pour objet un dispositif électronique de pilotage d'un système de communication pour un compteur électrique, le système de communication étant adapté pour être connecté au compteur électrique et pour transmettre à un utilisateur des données issues du compteur, le dispositif de pilotage comprenant :
- un module d'acquisition configuré pour acquérir un premier identifiant, le premier identifiant étant apte à identifier de manière unique l'utilisateur,
- un module de réception configuré pour recevoir des deuxième et troisième identifiants de la part du système de communication, le deuxième identifiant étant apte à identifier de manière unique le système de communication et le troisième identifiant étant apte à identifier de manière unique le compteur électrique, et
- un module de test configuré pour tester la validité d'un appairage du système de communication avec le compteur électrique, en fonction des premier, deuxième et troisième identifiants ; l'appairage étant autorisé en cas de test positif et inhibé sinon.

L'invention a également pour objet une installation électronique de transmission de données issues d'un compteur électrique, l'installation de transmission comprenant un système de communication adapté pour être connecté au compteur électrique et pour transmettre à un utilisateur des données issues du compteur électrique, et un dispositif électronique de pilotage du système de communication, le dispositif de pilotage étant tel que défini ci-dessus.

Suivant d'autres aspects avantageux de l'invention, l'installation de transmission comprend une ou plusieurs des caractéristiques suivantes, prises isolément ou suivant toutes les combinaisons techniquement possibles :
- le système de communication est un système de communication ERL, le compteur électrique étant un compteur électrique Linky^{™} équipé d'une interface TIC via laquelle sont issues les données aptes à être transmises par le système de communication ;
- l'installation de transmission comprend en outre un équipement électronique de supervision connecté, d'une part, au système de communication, et d'autre part, au dispositif électronique de pilotage, via un réseau de communication.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une vue schématique d'une installation électronique selon l'invention de transmission de données issues d'un compteur électrique, l'installation de transmission comprenant un système de communication connecté au compteur électrique et apte à transmettre à un utilisateur des données issues du compteur électrique, et un dispositif électronique de pilotage du système de communication ;
- la figure 2 est un organigramme d'un procédé, selon l'invention, de pilotage du système de communication, le procédé étant mis en oeuvre par le dispositif électronique de pilotage de la figure 1 ; et
- la figure 3 est un chronogramme du procédé de pilotage selon l'invention.

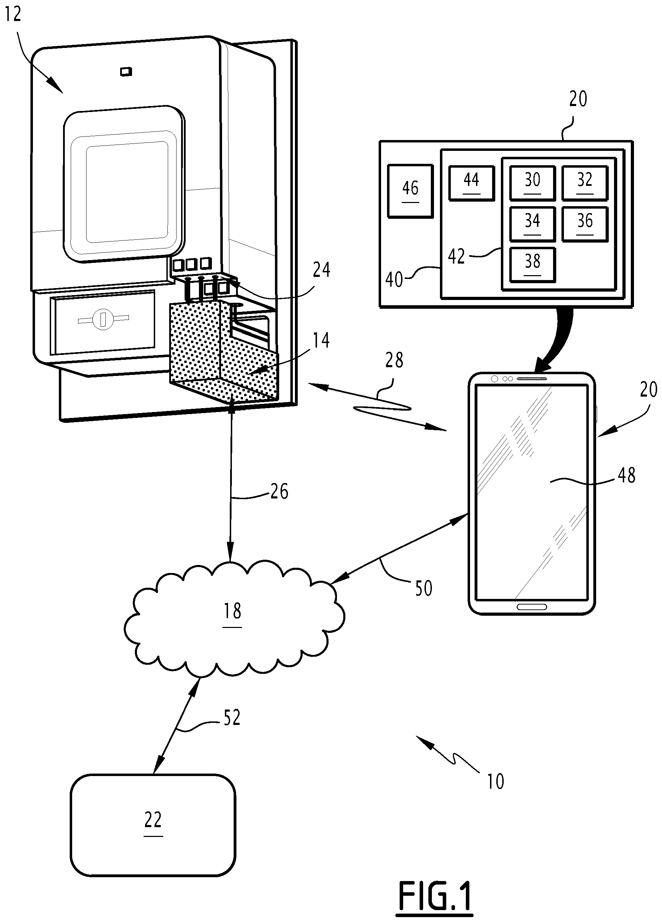

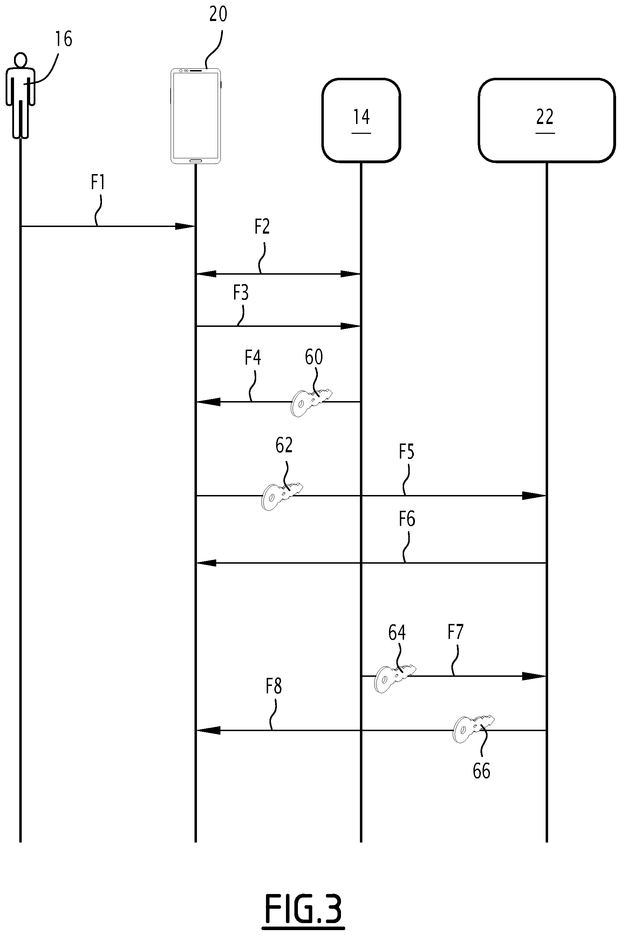

Sur la figure 1, une installation électronique 10 de transmission de données issues d'un compteur électrique 12 comprend un système de communication 14 adapté pour être connecté au compteur électrique 12 et pour transmettre à un utilisateur 16 (visible à la figure 3) des données issues du compteur électrique 12 via un réseau de communication 18. Elle comprend en outre un dispositif électronique 20 de pilotage du système de communication 14.

En complément facultatif, l'installation électronique de transmission 10 comprend un équipement électronique de supervision 22 connecté, d'une part, au système de communication 14, et d'autre part, au dispositif électronique de pilotage 20, via le réseau de communication 18.

L'installation électronique de transmission 10 est alors configurée pour transmettre régulièrement à l'utilisateur 16 des données issues du compteur électrique 12, telles que des données de consommation électrique, notamment afin d'aider l'utilisateur 16 à gérer la consommation électrique globale associée à ce compteur électrique 12, ainsi que celle de différents équipements électriques alimentés par ce compteur électrique 12.

Le compteur électrique 12 est connu en soi, et comporte de préférence une interface de connexion 24 pour la connexion du système de communication 14. Le compteur électrique 12 est typiquement un compteur électrique Linky^{™}, de la société ENEDIS, et l'interface de connexion 24 est une interface TIC via laquelle sont issues les données aptes à être transmises ensuite par le système de communication 14.

Le système de communication 14 est typiquement un système de communication ERL, tel que la clé Atome commercialisée par la société TOTAL DIRECT ENERGIE.

Le système de communication 14 est connu en soi et comporte notamment un émetteur-récepteur, non représenté, apte à envoyer/recevoir des données avec le réseau de communication 18 via une première liaison de données 26, de préférence sans fil, et à envoyer/recevoir des données avec le dispositif de pilotage 20 via une deuxième liaison de données 28, de préférence sans fil. La première liaison de données 26 est par exemple conforme à la norme Wi-Fi, et la deuxième liaison de données 28 est une liaison de données à plus courte distance, par exemple conforme à la norme Bluetooth, en particulier la norme Bluetooth Low Energy, également notée BLE.

L'utilisateur 16 a un premier identifiant apte à l'identifier de manière unique.

Le réseau de communication 18 est connu en soi, et est par exemple partiellement basé sur le réseau Internet.

Le dispositif électronique de pilotage 20 est configuré pour piloter le système de communication 14 et comprend un module 30 d'acquisition du premier identifiant, un module 32 de réception de deuxième et troisième identifiants de la part du système de communication 14, le deuxième identifiant étant apte à identifier de manière unique le système de communication 14 et le troisième identifiant étant apte à identifier de manière unique le compteur électrique 12.

Le dispositif électronique de pilotage 20 comprend également un module 34 de test de la validité d'un appairage du système de communication 14 avec le compteur électrique 12, en fonction des premier, deuxième et troisième identifiants, l'appairage étant autorisé en cas de test positif et inhibé sinon.

En complément facultatif, le dispositif électronique de pilotage 20 comprend un module 36 d'envoi au système de communication 14 d'une requête d'obtention des deuxième et troisième identifiants.

En complément facultatif encore, le dispositif électronique de pilotage 20 comprend un module 38 d'obtention, de la part du système de communication 14, et de préférence via l'équipement de supervision 22, de données issues du compteur électrique 12 si l'appairage du système de communication 14 avec le compteur électrique 12 a été préalablement autorisé.

Dans l'exemple de la figure 1, le dispositif électronique de pilotage 20 comprend une unité de traitement d'informations 40 formée par exemple d'une mémoire 42 et d'un processeur 44 associé à la mémoire 42. Dans cet exemple, le dispositif de pilotage 20 comprend également un émetteur-récepteur 46 apte à envoyer/recevoir des données avec le système de communication 14 via la deuxième liaison de données 28.

Le dispositif de pilotage 20 est par exemple embarqué au sein d'un téléphone mobile ou ordiphone (de l'anglais *smartphone*), comportant en outre un écran d'affichage 48, de préférence tactile, comme représenté sur la figure 1. En variante, le dispositif de pilotage 20 est embarqué au sein d'une tablette électronique comportant elle aussi l'écran d'affichage 48.

Le dispositif de pilotage 20 est apte à communiquer avec le réseau de communication 18 via une troisième liaison de données 50, de préférence sans fil, telle qu'une liaison de données conforme à la norme Wi-Fi.

Dans l'exemple de la figure 1, le module d'acquisition 30, le module de réception 32 et le module de test 34, ainsi qu'en complément facultatif le module d'envoi 36 et le module d'obtention 38, sont réalisés chacun sous forme d'un logiciel, ou d'une brique logicielle, exécutables par le processeur 44. La mémoire 42 du dispositif de pilotage 20 est alors apte à stocker un logiciel d'acquisition du premier identifiant, un logiciel de réception des deuxième et troisième identifiants de la part du système de communication 14 et un logiciel de test de la validité de l'appairage du système de communication 14 avec le compteur électrique 12, en fonction des premier, deuxième et troisième identifiants. En complément facultatif, la mémoire 42 du dispositif de pilotage 20 est également apte à stocker un logiciel d'envoi au système de communication 14 de la requête d'obtention des deuxième et troisième identifiants, ainsi qu'un logiciel d'obtention de la part du système de communication 14, et de préférence via l'équipement de supervision 22, de données issues du compteur électrique 12. Le processeur 44 est alors apte à exécuter chacun des logiciels parmi le logiciel d'acquisition, le logiciel de réception et le logiciel de test, ainsi qu'en complément facultatif le logiciel d'envoi et le logiciel d'obtention.

En variante non représentée, le module d'acquisition 30, le module de réception 32, et le module de test 34, ainsi qu'en complément facultatif le module d'envoi 36 et le module d'obtention 38, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif de pilotage 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles.

L'équipement de supervision 22 est par exemple un serveur informatique. L'équipement de supervision 22 est apte à communiquer avec le réseau de communication 18 via une quatrième liaison de données 52, par exemple filaire.

La première liaison de données 26, entre le système de communication 14 et l'équipement de supervision 22, en particulier entre le système de communication 14 et le réseau de communication 18, est de préférence sécurisée. La première liaison de données 26 est par exemple conforme à la norme Wi-Fi avec une sécurisation de type WPA (de l'anglais *Wi-Fi Protected Access*), de préférence WPA2, de préférence encore WPA2 combiné à un protocole TLS (de l'anglais *Transport Layer Security*).

Le module d'acquisition 30 est configuré pour acquérir le premier identifiant qui identifie de manière unique l'utilisateur 16. Le module d'acquisition 30 est par exemple configuré pour acquérir le premier identifiant de la part de l'équipement de supervision 22, suite une authentification préalable de l'utilisateur 16 auprès de cet équipement de supervision 22, par exemple par l'intermédiaire d'une application logicielle dédiée. En variante, le module d'acquisition 30 est configuré pour acquérir le premier identifiant suite à une opération de saisie de la part de l'utilisateur 16, par exemple à l'aide de moyens de saisie, non représentés, équipant le téléphone mobile ou la tablette électronique.

Le module de réception 32 est configuré pour recevoir les deuxième et troisième identifiants de la part du système de communication 14. Le deuxième identifiant identifie de manière unique le système de communication 14 et est par exemple un numéro de série du système de communication 14, tel que le CID (de l'anglais *Customer IDentifiant*). Le CID comprend par exemple le numéro de série du système de communication 14, ainsi que des chiffres complémentaires relatifs à la fabrication du système de communication 14. Le troisième identifiant identifie de manière unique le compteur électrique 12, et est par exemple le point de livraison, également noté PDL, apte à être lu par le système de communication 14 au sein du compteur électrique 12 via l'interface de connexion 24.

Le module de réception 32 est par exemple configuré pour recevoir les deuxième et troisième identifiants suite à l'envoi préalable d'une requête d'obtention des deuxième et troisième identifiants, envoyée par le module d'envoi 36 au système de communication 14, ainsi que cela sera décrit plus en détail par la suite.

Le module de réception 32 est par exemple configuré pour recevoir les deuxième et troisième identifiants sous forme d'au moins un message chiffré via une première clé de chiffrement 60 visible à la figure 3. Chaque identifiant parmi les deuxième et troisième identifiants est par exemple reçu sous forme d'un message chiffré distinct et respectif.

Le module de test 34 est configuré pour tester la validité de l'appairage du système de communication 14 avec le compteur électrique 12, ceci en fonction des premier, deuxième et troisième identifiants, et pour autoriser alors l'appairage en cas de test positif, pour permettre l'envoi ultérieur des données, telles que des données de consommation, issues du compteur électrique 12 et via le système de communication 14. En cas de test négatif, c'est-à-dire si l'appairage du système de communication 14 avec le compteur électrique 12 n'est pas valide au regard des premier, deuxième et troisième identifiants, alors le module de test 34 est configuré pour inhiber ledit appairage, c'est-à-dire pour interdire l'appairage, ainsi que toute émission ultérieure de données issues du compteur électrique 12 de la part du système de communication 14.

Pour le test de ladite validité de l'appairage, le module de test 34 est par exemple configuré pour émettre, à destination de l'équipement électronique de supervision 22, une requête de validation d'un triplet formé des premier, deuxième et troisième identifiants, le test de validité de l'appairage étant alors ensuite positif en cas de réception d'une validation dudit triplet, de la part de l'équipement de supervision 22 et en réponse à ladite requête de validation. La validation du triplet renvoyée par l'équipement de supervision 22 est typiquement un message confirmant que le triplet des premier, deuxième et troisième identifiants est valide, et que l'appairage du système de communication 14 avec le compteur électrique 12 peut alors être autorisé.

En complément facultatif, le module de test 34 est de préférence configuré pour émettre la requête de validation sous forme d'au moins un message chiffré, par exemple à l'aide d'une deuxième clé de chiffrement 62 visible sur la figure 3. La deuxième clé de chiffrement 62 est de préférence identique à la première clé de chiffrement 60. Le message chiffré, émis par le module de test 34 à destination de l'équipement de supervision 22, comporte par exemple le message chiffré reçu du système de communication 14 et contenant les deuxième et troisième identifiants.

En complément facultatif, le module d'envoi 36 est configuré pour envoyer au système de communication 14 la requête d'obtention des deuxième et troisième identifiants, afin que le système de communication 14 émette ensuite, en réponse à cette requête d'obtention, les deuxième et troisième identifiants à destination du dispositif de pilotage 20, et que le module de réception 32 les reçoive.

En complément facultatif encore, si l'appairage du système de communication 14 avec le compteur électrique 12 a été préalablement autorisé par le module de test 34, le module d'obtention 38 est configuré pour obtenir, de la part du système de communication 14, et de préférence via l'équipement de supervision 22, les données issues du compteur électrique 12, en particulier des données de consommation électrique.

Comme cela sera décrit plus en détail par la suite en regard de la figure 3, le module d'obtention 38 est par exemple configuré pour obtenir par l'intermédiaire de l'équipement de supervision 22 ces données issues du compteur électrique 12, ces données étant alors émises par le système de communication 14 à destination de l'équipement de supervision 22, optionnellement sous forme d'au moins un message chiffré, par exemple à l'aide d'une troisième clé de chiffrement 64 avant d'être retransmises au dispositif de pilotage 20, optionnellement sous forme d'au moins un message chiffré, par exemple à l'aide d'une quatrième clé de chiffrement 66.

La troisième liaison de données 50, entre le dispositif de pilotage 20 et l'équipement de supervision 22, en particulier entre le dispositif de pilotage 20 et le réseau de communication 18, est de préférence sécurisée. La troisième liaison de données 50 est par exemple selon le protocole HTTPS (de l'anglais *HyperText Transfer Protocol Secure*), c'est-à-dire selon le protocole HTTP (de l'anglais *HyperText Transfer Protocol*) combiné avec un protocole de sécurité, tel que le protocole TLS ou le protocole SSL (de l'anglais *Secure Sockets Layer*).

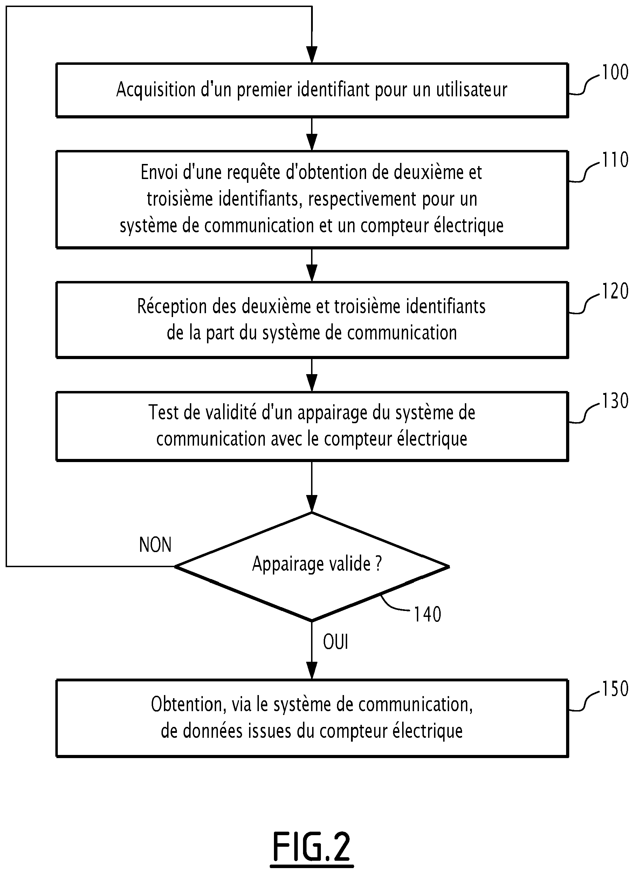

Le fonctionnement du dispositif de pilotage 20, et plus généralement de l'installation de transmission 10, va désormais être expliqué en regard de la figure 2 représentant un organigramme du procédé de pilotage du système de communication 14, le procédé étant mis en oeuvre par le dispositif de pilotage 10, ainsi que de la figure 3 représentant un chronogramme dudit procédé de pilotage selon l'invention.

Lorsque l'utilisateur 16 reçoit le système de communication 14, tel que la clé Atome, il commence par s'authentifier auprès du dispositif de pilotage 20 (flèche F1 à la figure 3), le dispositif de pilotage 20 étant par exemple formé du téléphone mobile ou de la tablette électronique de l'utilisateur, exécutant une application logicielle dédiée de pilotage correspondante.

Lors d'une étape initiale 100, le dispositif de pilotage 20 acquiert, via son module d'acquisition 30, le premier identifiant relatif à l'utilisateur 16. Le premier identifiant est par exemple acquis à partir des informations d'authentification préalablement saisies par l'utilisateur 16. Les informations d'authentification sont par exemple une adresse email et un mot de passe associé de l'utilisateur 16.

En variante, l'étape d'acquisition 100 comporte l'émission, par le module d'acquisition 30, desdites informations d'authentification à l'équipement de supervision 22 afin qu'il en vérifie la validité, puis en cas de vérification positive par l'équipement de supervision 22, l'émission en retour du premier identifiant unique de l'utilisateur 16 de la part de l'équipement 22 à destination du dispositif de pilotage 20, en particulier de son module d'acquisition 30.

Suite à cette étape d'acquisition 100, le dispositif de pilotage 20 établit une communication (flèche F2 à la figure 3) avec le système de communication 14 via la deuxième liaison de données 28, par exemple une communication conforme à la norme Bluetooth, de préférence à la norme Bluetooth Low Energy.

Lorsque la communication entre le dispositif de pilotage 20 et le système de communication 14 est établie, le dispositif de pilotage 20 effectue, de manière optionnelle, une étape suivante 110 d'envoi de la requête d'obtention des deuxième et troisième identifiants à destination du système de communication 14 (flèche F3 à la figure 3). Cet envoi optionnel est effectué par le module d'envoi 36.

Le dispositif de pilotage 20 passe ensuite à l'étape de réception 120, lors de laquelle le module de réception 32 reçoit les deuxième et troisième identifiants de la part du système de communication 14 (flèche F4 à la figure 3), par exemple en réponse à la requête d'obtention préalablement envoyée lors de l'étape d'envoi 110.

Les deuxième et troisième identifiants sont de préférence reçus sous forme d'au moins un message chiffré, le chiffrement étant par exemple effectué à l'aide de la première clé de chiffrement 60.

Les deuxième et troisième identifiants reçus permettent alors d'identifier de manière unique le système de communication 14 d'une part et le compteur électrique 12 d'autre part.

A l'issue de cette étape de réception 120, le dispositif de pilotage 20 effectue ensuite, lors de l'étape de test 130 et via son module de test 34, un test de validité de l'appairage du système de communication 14 avec le compteur électrique 12 à partir des premier, deuxième et troisième identifiants.

Ce test de validité permet alors de vérifier la cohérence entre les premier, deuxième et troisième identifiants reçus, c'est-à-dire que le deuxième identifiant qui identifie de manière unique le système de communication 14 correspond bien au troisième identifiant qui identifie lui le compteur électrique 12 de manière unique, et ceci pour l'utilisateur 16 identifié par le premier identifiant, ou encore en d'autres termes que le système de communication 14 est bien prévu pour être couplé audit compteur électrique 12 dudit utilisateur 16.

L'étape de test 130 comporte alors par exemple l'émission, à l'équipement électronique de supervision 22, de la requête de validation du triplet formé des premier, deuxième et troisième identifiants (flèche F5 à la figure 3). Cette requête de validation est de préférence émise sous forme d'au moins un message chiffré, le chiffrement étant par exemple effectué à l'aide de la deuxième clé de chiffrement 62. La deuxième clé de chiffrement 62 est de préférence identique à la première clé de chiffrement 60, le message chiffré, émis par le module de test 34 à destination de l'équipement de supervision 22, comportant le premier identifiant, ainsi que le message chiffré reçu du système de communication 14 et contenant les deuxième et troisième identifiants.

Si la validité du triplet formé des premier, deuxième et troisième identifiants est confirmée par l'équipement de supervision 22, alors il émet - en réponse à cette requête de validation - une validation dudit triplet (flèche F6 à la figure 3) à destination du dispositif de pilotage 20, en particulier de son module de test 34. Le test de validité de l'appairage est alors positif en cas de réception par le module de test 34 de ladite validation du triplet.

En complément, le triplet des premier, deuxième et troisième identifiants est alors figé et protégé dans une mémoire correspondante de l'équipement de supervision 22. Ce triplet ne peut être cassé, c'est-à-dire modifié ou altéré, sans une autorisation explicite de la part de l'équipement de supervision 22. Une telle autorisation de modification est par exemple prévue en cas de dysfonctionnement du système de communication 14, nécessitant de coupler un autre système de communication 14 au compteur électrique 12.

Le dispositif de pilotage 20 détermine ensuite, lors de l'étape 140 et via son module de test 34, si l'appairage entre le système de communication 14 et le compteur électrique 12 est valide, c'est-à-dire si le test de validité effectué lors de l'étape précédente 130 est positif ou non.

Si l'appairage n'est pas valide, c'est-à-dire si le test effectué lors de l'étape de test 130 est négatif, alors le dispositif de pilotage 20 retourne à l'étape initiale 100, afin d'effectuer au besoin un autre appairage, l'appairage courant étant inhibé, c'est-à-dire interdit, par le module de test 34, suite au test de validité négatif.

Sinon, si le test de validité effectué lors de l'étape de test 130 est positif, et que l'appairage entre le système de communication 14 et le compteur électrique 12 est alors considéré comme valide, et donc autorisé, le dispositif de pilotage 20 passe ensuite à l'étape suivante 150 lors de laquelle le module d'obtention 38 obtient - de préférence régulièrement - des données issues du compteur électrique 12, telles que des données de consommation électrique, de la part du système de communication 14, et de préférence via l'équipement de supervision 22.

L'étape d'obtention 150 comporte par exemple l'émission via le système de communication 14 desdites données issues du compteur électrique 12 à l'équipement de supervision 22 (flèche F7 à la figure 3), suivie de la retransmission desdites données par l'équipement de supervision 22 à destination du dispositif de pilotage 20, en particulier de son module d'obtention 38 (flèche F8 à la figure 3).

L'émission des données issues du compteur électrique 12 de la part du système de communication 14 à destination de l'équipement de supervision 22 est de préférence effectuée sous forme d'au moins un message chiffré, le chiffrement étant par exemple effectué à l'aide de la troisième clé de chiffrement 64. La retransmission ultérieure de ces données entre l'équipement de supervision 22 et le dispositif de pilotage 20 est de préférence également effectuée sous forme d'au moins un message chiffré, le chiffrement étant par exemple effectué à l'aide de la quatrième clé de chiffrement 66. Cette obtention des données issues du compteur électrique 12 sous forme de message(s) chiffré(s) permet alors d'améliorer encore la sécurité des données. De préférence encore, la troisième clé de chiffrement 64 est distincte de la quatrième clé de chiffrement 66, ces clés de chiffrement 64, 66 étant elles-mêmes distinctes des première et deuxième clés de chiffrement 60, 62.

Chaque émission de données issues du compteur électrique 12, telles que des données de consommation électrique, par le système de communication 14 à destination de l'équipement de supervision 22 (flèche F7 à la figure 3) comporte de préférence en outre les deuxième et troisième identifiants. Ceci permet alors à l'équipement de supervision 22 de vérifier régulièrement, de préférence à chaque réception de données de la part du système de communication 14, que le couple système de communication-compteur électrique reste valide pour chaque nouvelle émission de données issues du compteur électrique 12.

Le dispositif de pilotage 20 et le procédé de pilotage selon l'invention permettent alors d'améliorer la confidentialité et la protection des données, telles que des données de consommation électrique, issues du compteur électrique 12. Ils permettent en particulier de vérifier que, lors du couplage entre le système de communication 14 et le compteur électrique 12, puis à chaque émission de données de la part du système de communication 14, que les données remontées du compteur électrique 12 proviennent bien du compteur électrique correspondant à l'utilisateur 16 et que cette émission est effectuée via le système de communication 14 qui est bien prévu pour être couplé audit compteur électrique 12.

Le dispositif de pilotage 20 permet alors d'éviter un espionnage intempestif des données qui pourrait être effectué via le couplage entre un système de communication 14 et un compteur électrique 12 pour lequel ledit système de communication 14 ne serait pas autorisé.

## Revendications

1. Procédé de pilotage d'un système de communication (14) pour un compteur électrique (12), le système de communication (14) étant adapté pour être connecté au compteur électrique (12) et pour transmettre à un utilisateur (16) des données issues du compteur électrique (12), le procédé étant mis en oeuvre par un dispositif électronique (20) de pilotage et comprenant l'étape suivante :
- acquisition (100) d'un premier identifiant, le premier identifiant étant apte à identifier de manière unique l'utilisateur (16),
**caractérisé en ce qu'**il comprend en outre les étapes suivantes :
- réception (120) de deuxième et troisième identifiants de la part du système de communication (14), le deuxième identifiant étant apte à identifier de manière unique le système de communication (14) et le troisième identifiant étant apte à identifier de manière unique le compteur électrique (12), et
- test (130) de validité d'un appairage du système de communication (14) avec le compteur électrique (12), en fonction des premier, deuxième et troisième identifiants; l'appairage étant autorisé en cas de test positif et inhibé sinon.

2. Procédé selon la revendication 1, dans lequel le procédé comprend en outre, préalablement à l'étape de réception (120), une étape (110) d'envoi au système de communication (14) d'une requête d'obtention des deuxième et troisième identifiants,
les deuxième et troisième identifiants étant ensuite reçus lors de l'étape de réception (120), en réponse à la requête d'obtention.

3. Procédé selon la revendication 1 ou 2, dans lequel si l'appairage du système de communication (14) avec le compteur électrique (12) est autorisé à l'issue de l'étape de test (130), le procédé comprend en outre une étape (150) d'obtention, via le système de communication (14), de données issues du compteur électrique (12), telles que des données de consommation électrique.

4. Procédé selon l'une quelconque des revendications précédentes, dans lequel l'étape de test (130) comporte l'émission, à un équipement électronique de supervision (22), d'une requête de validation d'un triplet formé des premier, deuxième et troisième identifiants,
le test de validité de l'appairage étant ensuite positif en cas de réception d'une validation du triplet, de la part de l'équipement de supervision (22) et en réponse à la requête de validation.

5. Procédé selon la revendication 4, dans lequel, lors de l'étape de test (130), la requête de validation est émise sous forme d'au moins un message chiffré.

6. Programme d'ordinateur comportant des instructions logicielles qui, lorsqu'elles sont exécutées par un ordinateur, mettent en oeuvre un procédé selon l'une quelconque des revendications précédentes.

7. Dispositif électronique (20) de pilotage d'un système de communication (14) pour un compteur électrique (12), le système de communication (14) étant adapté pour être connecté au compteur électrique (12) et pour transmettre à un utilisateur (16) des données issues du compteur, le dispositif de pilotage (20) comprenant :
- un module d'acquisition (30) configuré pour acquérir un premier identifiant, le premier identifiant étant apte à identifier de manière unique l'utilisateur (16),
**caractérisé en ce qu'**il comprend en outre :
- un module de réception (32) configuré pour recevoir des deuxième et troisième identifiants de la part du système de communication (14), le deuxième identifiant étant apte à identifier de manière unique le système de communication (14) et le troisième identifiant étant apte à identifier de manière unique le compteur électrique (12), et
- un module de test (34) configuré pour tester la validité d'un appairage du système de communication (14) avec le compteur électrique (12), en fonction des premier, deuxième et troisième identifiants ; l'appairage étant autorisé en cas de test positif et inhibé sinon.

8. Installation électronique (10) de transmission de données issues d'un compteur électrique (12), l'installation de transmission (10) comprenant :
- un système de communication (14) adapté pour être connecté au compteur électrique (12) et pour transmettre à un utilisateur (16) des données issues du compteur électrique (12), et
- un dispositif électronique (20) de pilotage du système de communication (14),
**caractérisée en ce que** le dispositif de pilotage (20) est selon la revendication précédente.

9. Installation (10) selon la revendication 8, dans laquelle le système de communication (14) est un système de communication ERL, pour Émetteur Radio Linky^{™}, le compteur électrique (12) étant un compteur électrique Linky^{™} équipé d'une interface TIC, pour Télé-Information Client, via laquelle sont issues les données aptes à être transmises par le système de communication (14).

10. Installation (10) selon la revendication 8 ou 9, dans laquelle l'installation de transmission (10) comprend en outre un équipement électronique de supervision (22) connecté, d'une part, au système de communication (14), et d'autre part, au dispositif électronique de pilotage (20), via un réseau de communication (18).

## Patentansprüche

1. Steuerungsverfahren eines Kommunikationssystems (14) für einen Stromzähler (12), wobei das Kommunikationssystem (14) angepasst ist, um mit dem Stromzähler (12) verbunden zu werden und Daten von dem Stromzähler (12) an einen Benutzer (16) zu übertragen, wobei das Verfahren von einer elektronischen Steuerungsvorrichtung (20) durchgeführt wird und den folgenden Schritt umfasst:
- Erfassen (100) einer ersten Kennung, wobei die erste Kennung geeignet ist, um den Benutzer (16) eindeutig zu identifizieren,
**dadurch gekennzeichnet, dass** es ferner die folgenden Schritte umfasst:
- Empfangen (120) einer zweiten und dritten Kennung von dem Kommunikationssystem (14), wobei die zweite Kennung geeignet ist, um das Kommunikationssystem (14) eindeutig zu identifizieren und die dritte Kennung geeignet ist, um den Stromzähler (12) eindeutig zu identifizieren, und
- Testen (130) der Gültigkeit eines Koppelns des Kommunikationssystems (14) mit dem Stromzähler (12) abhängig von der ersten, zweiten und dritten Kennung, wobei das Koppeln bei einem positiven Test zugelassen und andernfalls gesperrt wird.

2. Verfahren nach Anspruch 1, wobei das Verfahren vor dem Empfangsschritt (120) außerdem einen Schritt (110) des Sendens einer Anfrage zum Erlangen der zweiten und dritten Kennung an das Kommunikationssystem (14) umfasst,
wobei die zweite und die dritte Kennung dann in dem Empfangsschritt (120) als Antwort auf die Anforderung zum Erlangen empfangen werden.

3. Verfahren nach Anspruch 1 oder 2, wobei, wenn das Koppeln des Kommunikationssystems (14) mit dem Stromzähler (12) nach dem Testschritt (130) autorisiert ist, das Verfahren ferner einen weiteren Schritt (150) zum Erlangen von Daten von dem Stromzähler (12), wie z. B. Stromverbrauchsdaten, über das Kommunikationssystem (14) umfasst.

4. Verfahren nach einem der vorherigen Ansprüche, wobei der Testschritt (130) das Senden einer Anfrage an eine elektronische Überwachungsausrüstung (22) zur Validierung eines Tripels umfasst, das gebildet wird von der ersten, zweiten und dritten Kennung, wobei der Test einer Gültigkeit des Koppelns anschließend positiv ist, wenn eine Validierung des Tripels seitens der Überwachungsausrüstung (22) und als Antwort auf die Validierungsanfrage empfangen wird.

5. Verfahren nach Anspruch 4, wobei in dem Testschritt (130) die Validierungsanfrage in Form mindestens einer verschlüsselten Nachricht ausgegeben wird.

6. Computerprogramm, umfassend Softwareanweisungen, die, wenn sie von einem Computer ausgeführt werden, ein Verfahren nach einem der vorherigen Ansprüche implementieren.

7. Elektronische Vorrichtung (20) zum Steuern eines Kommunikationssystems (14) für einen Stromzähler (12), wobei das Kommunikationssystem (14) angepasst ist, um mit dem Stromzähler (12) verbunden zu werden und Daten von dem Stromzähler an einen Benutzer (16) zu übertragen, die Steuerungsvorrichtung (20) umfassend:
- ein Erfassungsmodul (30), das konfiguriert ist, um eine erste Kennung zu erfassen, wobei die erste Kennung geeignet ist, um den Benutzer (16) eindeutig zu identifizieren, **dadurch gekennzeichnet, dass** es ferner Folgendes umfasst:
- ein Empfangsmodul (32), das konfiguriert ist, um eine zweite und eine dritte Kennung von dem Kommunikationssystem (14) zu empfangen, wobei die zweite Kennung geeignet ist, um das Kommunikationssystem (14) eindeutig zu identifizieren und die dritte Kennung geeignet ist, um den Stromzähler (12) eindeutig zu identifizieren, und
- ein Testmodul (34), das konfiguriert ist, um die Gültigkeit eines Koppelns des Kommunikationssystems (14) mit dem Stromzähler (12) abhängig von der ersten, der zweiten und der dritten Kennung zu testen; wobei das Koppeln im Falle eines positiven Tests zugelassen und andernfalls gesperrt wird.

8. Elektronische Anlage (10) zur Übertragung von Daten, die von einem Stromzähler (12) stammen, die Übertragungsanlage (10) umfassend:
- ein Kommunikationssystem (14), das angepasst ist, um mit dem Stromzähler (12) verbunden zu werden und Daten von dem Stromzähler (12) an einen Benutzer (16) zu übertragen, und
- eine elektronische Vorrichtung (20) zur Steuerung des Kommunikationssystems (14), **dadurch gekennzeichnet, dass** die Steuerungsvorrichtung (20) gemäß dem vorherigen Anspruch ist.

9. Anlage (10) nach Anspruch 8, wobei das Kommunikationssystem (14) ein ERL-Kommunikationssystem ist, für Linky^{™}-Funksender, wobei der Stromzähler (12) ein elektronischer Zähler Linky^{™} ist, der mit einer TCI-Schnittstelle, für Tele-Client-Information, ausgestattet ist, über die die Daten ausgegeben werden, die geeignet sind, um von dem Kommunikationssystem (14) übertragen zu werden.

10. Anlage (10) nach Anspruch 8 oder 9, wobei die Sendeanlage (10) ferner eine elektronische Überwachungsausrüstung (22) umfasst, die einerseits mit dem Kommunikationssystem (14) und andererseits über ein Kommunikationsnetz (18) mit der elektronischen Steuerungsvorrichtung (20) verbunden ist.

## Claims

1. A method for controlling a communication system (14) for an electric meter (12), the communication system (14) being adapted to be connected to the electric meter (12) and to transmit data from the electric meter (12) to a user (16), the method being implemented by an electronic control device (20) and comprising the following step:
- acquisition (100) of a first identifier, the first identifier being capable of uniquely identifying the user (16),
**characterised in that** it further comprises the following steps:
- receiving (120) second and third identifiers from the communication system (14), the second identifier being capable of uniquely identifying the communication system (14) and the third identifier being capable of uniquely identifying the electric meter (12), and
- testing (130) the validity of a pairing of the communication system (14) with the electric meter (12), as a function of the first, second and third identifiers; the pairing being authorised in the event of a positive test and inhibited otherwise.

2. The method according to claim 1, wherein the method further comprises, prior to the step of receiving (120), a step (110) of sending to the communication system (14) a request to obtain the second and third identifiers,
the second and third identifiers are then received during the step of receiving (120), in response to the request to obtain.

3. The method according to claim 1 or 2, wherein if the pairing of the communication system (14) with the electric meter (12) is authorised at the end of the step of testing (130), the method further comprises a step (150) of obtaining, via the communication system (14), data from the electric meter (12), such as electricity consumption data.

4. The method according to any one of the preceding claims, wherein the step of testing (130) comprises sending, to electronic supervision equipment (22), a request for validation of a triplet formed by the first, second and third identifiers, the pairing validity test then being positive if validation of the triplet is received from the supervision equipment (22) in response to the validation request.

5. The method according to claim 4, wherein, during the step of testing (130), the validation request is sent in the form of at least one encrypted message.

6. A computer program comprising software instructions which, when executed by a computer, implement a method according to any one of the preceding claims.

7. An electronic device (20) for controlling a communication system (14) for an electric meter (12), the communication system (14) being adapted to be connected to the electric meter (12) and to transmit data from the meter to a user (16), the control device (20) comprising:
- an acquisition module (30) configured to acquire a first identifier, the first identifier being capable of uniquely identifying the user (16),
**characterized in that** it further comprises:
- a module for receiving (32) second and third identifiers from the communication system (14), the second identifier being capable of uniquely identifying the communication system (14) and the third identifier being capable of uniquely identifying the electric meter (12), and
- a module for testing (34) the validity of a pairing of the communication system (14) with the electric meter (12), as a function of the first, second and third identifiers; the pairing being authorised in the event of a positive test and inhibited otherwise.

8. An electronic installation (10) for transmitting data from an electric meter (12), the transmission installation (10) comprising:
- a communication system (14) adapted to be connected to the electric meter (12) and to transmit data from the electric meter (12) to a user (16), and
- an electronic device (20) for controlling the communication system (14), **characterised in that** the control device (20) is according to the preceding claim.

9. The installation (10) according to claim 8, wherein the communication system (14) is an ERL communication system, for Émetteur Radio Linky^{™}, the electric meter (12) being an electrical Linky^{™} meter equipped with a CIS interface, for Customer Information System, via which the data suitable for transmission by the communication system (14) are obtained.

10. The installation (10) according to claim 8 or 9, wherein the transmission installation (10) further comprises electronic supervision equipment (22) connected, on the one hand, to the communication system (14) and, on the other hand, to the electronic control device (20), via a communication network (18).
